# EUROPEAN PATENT APPLICATION

(11) **EP 0 615 198 A1**
(43) Date of publication of application: **14.09.1994**
(21) Application number: 93103638.8
(22) Date of filing: 08.03.1993
(51) Int. Cl.: G06F 15/21

(54) **Method for processing, handling, and presenting data pertaining to an enterprise in the form of a data model**

(71) Applicant: International Business Machines Corporation, Armonk, N.Y. 10504 (US)
(72) Inventor: Feulner, Dieter, W-7030 Böblingen (DE); Weigelt, Ursula, W-7250 Leonberg (DE); Wilfert, Ludwig, W-7000 Stuttgart 80 (DE)
(74) Representative: Schäfer, Wolfgang, Dipl.-Ing.

(57) **Abstract**

The present invention provides a method for processing, handling and presenting data pertaining to an enterprise in the form of a data model. The data within that model and the relationships are presented, looked-at and used from two different points of view, from an application point of view that identifies which entities are used by individual program applications, and from an entity point of view which identifies all existing entities within a program series and their relationships at the different levels of decomposition independently of any application.

## Description

The invention pertains to a method for processing, handling, presenting data pertaining to an enterprise, especially a manufacturing enterprise, in the form of a data model, in order to improve the understanding of business processes.

The immense growth of data and applications in enterprises, especially also in manufacturing enterprises, leads to exorbitant problems in data storage and data usage. This kind of chaos is described e. g. in the preface of the book "Aufbau betrieblicher Informationssysteme mittels konzeptioneller Datenmodellierung" by Max Vetter, 6. Auflage, Teubner Verlag, Stuttgart, to be the problem of the century. In this article this problem is defined as coping with the data chaos which came up nearly everywhere due to historically uncontrolled grown data masses. This asks for providing a basis that effectively uses possibilities of the information technique which points far in the future. Such a basis could be an enterprise-wide data model.

It is the object of the present invention to provide a data model that is able to contribute in solving the problem of uncontrolled growth of data in enterprises, especially in manufacturing enterprises. The invention solves these problems in advantageous manner by applying the features laid down in the independent claim. Further advantageous embodiments are laid down in the subclaims.

The given modelling in accordance with the present invention provides an understanding of the present and future business activities of an enterprise. Thus, for example the data model for the manufacturing industry provides a consistent view of data across the enterprise, helps to prevent data redundancy, enables the sharing of data, simplifies the development of application programs, and also facilitates an open end user access to the data.

The present invention provides a method for processing, handling and presenting data pertaining to an enterprise in the form of a data model. The data within that model and the relationships are presented, looked-at and used from two different points of view, from an application point of view that identifies which entities are used by individual program applications, and from an entity point of view which identifies all existing entities within an enterprise and their relationships at the different levels of decomposition independently of any application.

The benefits given by the present invention can be seen in that an overview of organization structures and dependency of an enterprise is given in a graphical view. Furthermore, information is shown in a clear, distinct way. The data model in accordance with the present invention serves as a basis to compare the enterprises data structures to standard data structures. It also helps a customer to manage his growth to computer integrated manufacturing. Furthermore, it is valuable in giving know-how of application and its related data contests, structure and relations. It also is reliable in representing design results that are useable as basis for the development of a series of application programs, as for example partly given by the application program of the IBM CIM Production Program Series.

The invention will be described in more detail in connection with an embodiment shown in the drawing in which
- Fig. 1: shows an overview of the data model structure in accordance with the present invention;
- Fig. 2: shows schematically the application view;
- Fig. 3: shows schematically the entity view;
- Fig. 4: shows schematically the different relationship representation used in the inventive data model;
- Fig. 5: shows schematically the relationship between the data model and a relational data base;
- Fig. 6: shows a possible application structure;
- Fig. 7: shows CIM architecture elements;
- Fig. 8: (formed by Fig. 8A and 8B) shows defined entity types;
- Fig. 9: shows schematically the structure of the engineering application area and the associated business objects and entity groups;
- Fig. 10: shows the engineering business objects addressed by engineering with their different relationships;
- Fig. 11: shows the entity groups addressed by engineering with their different relationships;
- Fig. 12: shows the entity group "Bill of Material";
- Fig. 13: shows the business object product with its entities and their different relationships;
- Fig. 14: shows the entities belonging to the entity group item and its different relationships;
- Fig. 15: shows the entities of the entity group item sales data with its different relationships.

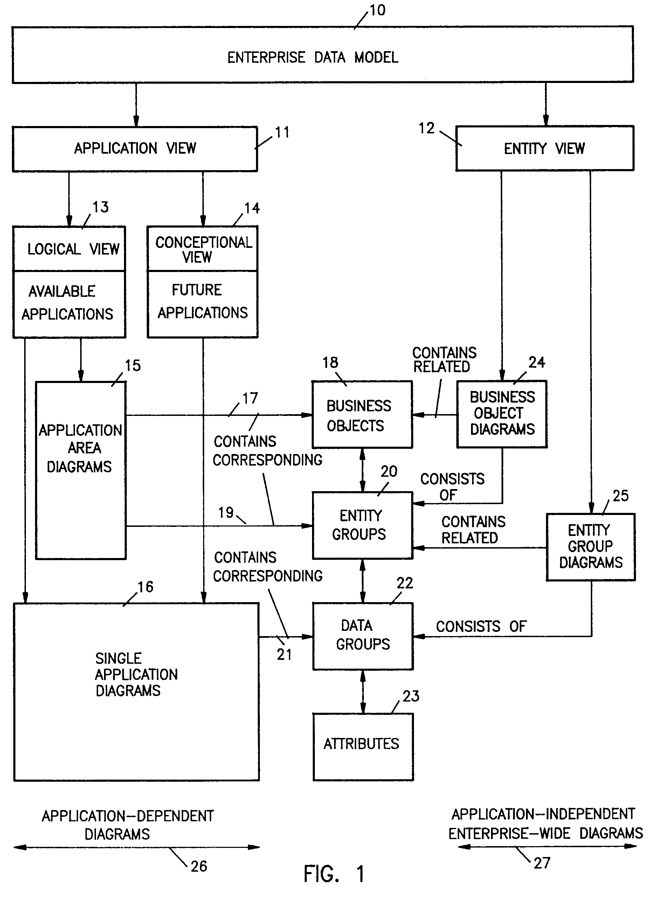

Fig. 1 shows in an schematic overview the scope of the data model 10 in accordance with the present invention. Data model 10 encompasses an application view 11 and may additionally or as an alternative include an entity view 12. The application view 11 includes logical application models which represent and support current and already available applications. Those applications can be shown in graphical form in application area diagrams 15 or in single application diagrams 16. The application view 11 also includes the conceptional view 14. In the conceptional view 14 there are future applications or conceptional application models which can be seen as extensions of already existing applications or of completely new applications. Those future applications can also be shown in single application diagrams 16. As indicated by arrow 17 the application area diagrams 15 contain corresponding business objects 18. Furthermore, as indicated by arrow 19 the application area diagrams 15 also contain corresponding entity groups 20. The single application diagrams contain corresponding data groups 22 as indicated by arrow 21. The data groups 22 are specified by attributes 23. In addition to the two types of models, the logical view 13 and the conceptional view 14, the program series data model 10 provides the entity view 12 encompassing business object diagrams 24 and entity group diagrams 25. These different entity types define and represent data at different composition levels. Each business object diagram 24 shows all entity groups 20 which built the business object. Furthermore, it shows all other business objects which are related to it. Each entity group diagram 25 shows all data groups 22 which belong to the entity groups. Furthermore, it shows all other entity groups which have relationships to it. As indicated by double arrow 26 the enterprise data model 10 provides application-dependent diagrams. As indicated by double arrow 27 the data model 10 can also provide application-independent enterprise-wide diagrams.

One key object of the data model 10 shown in Fig. 1 is to establish a data model based on already given applications that will serve as a base for evolutionary integration with additional applications. The information provided in the logical modules given by the logical view 13 are the base for the application solutions and define the means of execution of the real relational tables. The information provided in the conceptional models given by the conceptional view 14, can be seen as a frame work that allow user to model their own business and data processing activities.

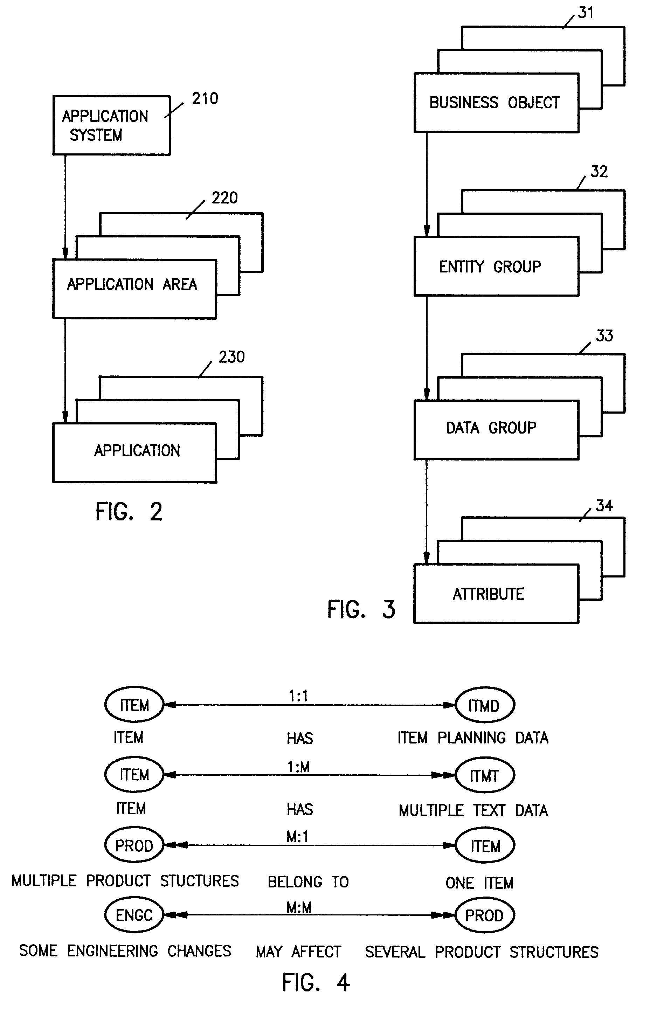

The complete data of an existing application system and its relationship are presented in accordance with the present invention from two different points of view.
1. From an application point of view as shown in Fig. 2.
   The program series 210 contains different application areas 220 and each application area contains different applications 230. This application point of view identifies which entities are used by the individual applications 230 within the different application areas 220.
   The application view describes the data required and the relationships between the data for all programs forming a program series of relational programs. Each application area 220 is subdivided into two data model diagrams, showing the corresponding business objects and the entity groups. For each application related to an application area detailed application data model diagrams are provided.
   Fig. 2 shows how the application is broken down from the program series 210 over the application area 220 down to the detailed application 230. This hierarchy is used to describe the data model from the application point of view.
2. From an entity point of view as shown in Fig. 3.
   This entity point of view identifies all existing entities of the application system and their relationships at the different levels of decomposition independently of any application functions.
   As shown in Fig. 3 in the entity view the highest level is the business object level 31. Underneath that there is a further decomposition level containing entity groups 32 underneath that there are data groups 33 which have different attributes 34 at the lowest level. The entity view describes the data required for the enterprises' business processes. It shows the information relationship through the various levels of an enterprise independent of the application functions.
   Thus, in Fig. 3 the hierarchy shows the business object 31 as the highest level and the attribute level 34 as the lowest one. The business object 31 is decomposed to entity groups 32, and the entity groups 32 are decomposed to data groups 33 which consists of attributes 34. Thus, this hierarchy is used to describe the data model from the entity point of view.

Data model diagrams like those indicated by the boxes 15, 16, 24, and 25 in Fig. 1, show the entities and relationships between the entities. Entities are represented in these diagrams as bubbles and entities are connected with lines to show relationship. Entities show the entity identification IDs and the entity name as labels.

In Fig. 4 there are shown different relationships which are used to represent and to show different kinds of relationships. In the first line there is a one-two-one (1 : 1) relationship indicated by two bubbles left and right. One occurrence of an entity relates to one occurrence of another entity. A one-two-one relationship between two entities is shown in the diagrams with a single line and an arrow pointing to both one-sided entities. Thus, in the first line of Fig. 4 the item ITEM has item planning data ITMD.

The one-two-many (1 : M) type of relationship is shown in the second line of Fig. 4. There the item ITEM has multiple text data ITMT. In general, one occurrence of an entity relates to several occurrences of another entity. A one-two-many relationship is shown in the diagram with a double arrow pointing to the many-sided entity and a single arrow pointing to the one-sided entity.

The third type of relationship is the many-to-one (M : 1) relationship. This is shown in the third line of Fig. 4 where multiple product structures PROD belong to one item ITEM. Thus, many occurrences of an entity relates to one occurrence of another entity. A many-two-one relationship is shown in the diagrams with a double arrow pointing to the many-sided entity and a single arrow pointing to the one-sided entity.

The forth type of relationship is shown in the forth line of Fig. 4 as the many-two-many (M : M) relationship. The example shown means that one engineering change ENGC may effect several product structures PROD. Furthermore, one product structure PROD may be effected by more than one engineering change ENGC. Thus, one occurrence of an entity relates to several occurrences of another entity and one occurrence of that second entity relates to many occurrences of the first entity. A many-two-many relationship is shown in the diagrams with two double arrows pointing to both many-sided entities.

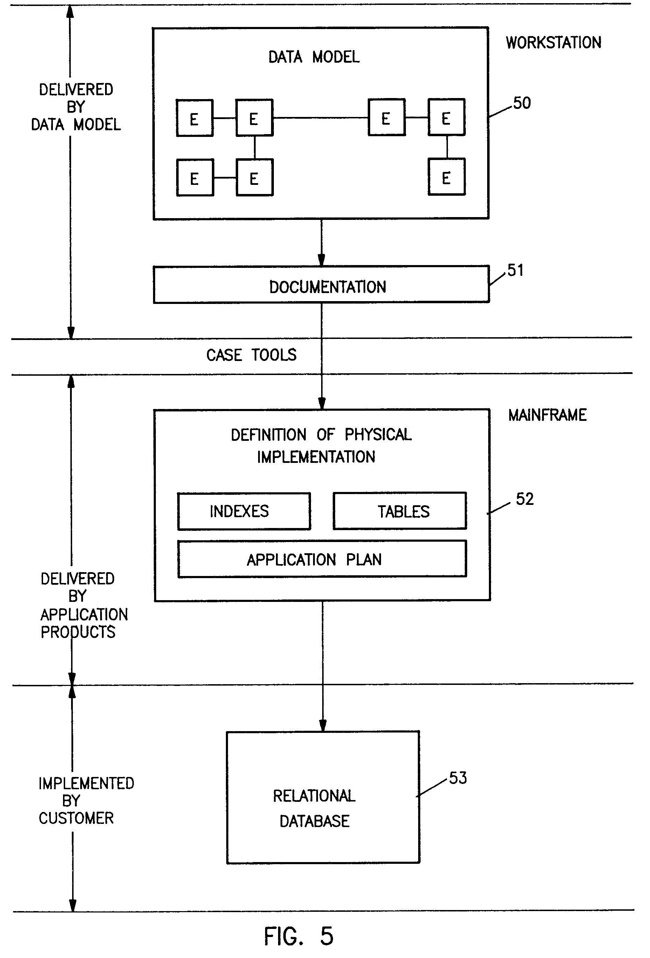

In Fig. 5 there is indicated schematically the relationship between the data model 50 and the relational data base 53. The data model 50 with its different entities and relationships runs preferably on a workstation level and provides documentation 51 of the different model constellations and submodels. Thus, data model and documentation is delivered by the data model. Out of the documentation by the means of CASE TOOLS the definition of physical implementation 52 is generated. This definition of physical implementation includes for example tables, indexes and application plans. This usually runs on the main frame level and is delivered by the application program products. Underneath this definition of physical implementation 52 there is implemented by the customer the relational data base 53 pertaining to the application system. Within data model 50 there the data model user can add new entities E and attributes which than will result in physical definitions created by the case tool.

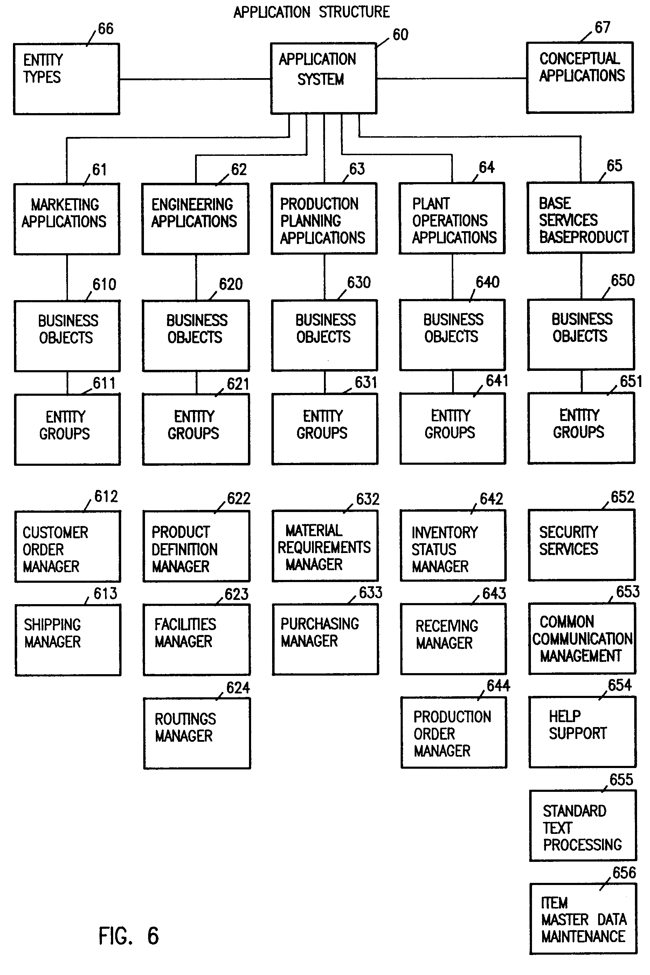

In Fig. 6 there is schematically shown the application structure 60 of the program series. This application structure contains five application areas, the marketing applications 61, the engineering applications 62, the production planning applications 63, the plant operations applications 64, and the base services base products 65. Furthermore, the application structure 60 can encompass entity types 66 and conceptional applications 67. Each application area encompasses business objects 610, 620, 630, 640, 650 and entity groups 611, 621, 631, 641, and 651.

In an application structure of an application system like the one shown in Fig. 6 there might exist already some program products in the different application areas 61 to 65. Those are for example in the marketing application area the programs Customer Order Manager 612 and the Shipping Manager 613. In the engineering application there might exists already the programs Production Definition Manager 622, Facilities Manager 623, and Routings Manager 624. In the production planning application area 63 there might exist already a program Material Requirements Manager 632 and a program Purchasing Manager 633. In the application area plant operations applications 64 there can exist the program Inventory Status Manager 642, the Receiving Manager 643, and the Production Order Manager 644. In the base services base product application area 65 there might for example exist programs like Security Services 652, Common Communication Management 653, Help Support 654, Standard Text Processing 655, and Item Master Data Maintenance 656.

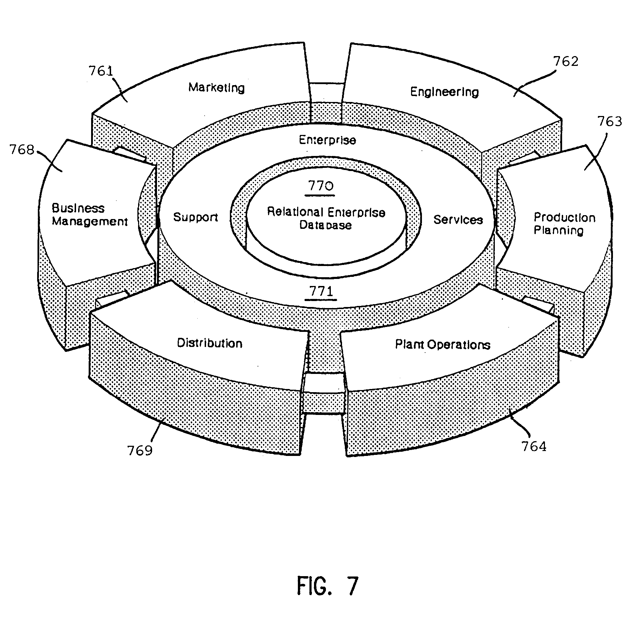

A somewhat different schematic representation of the different application areas is shown in Fig. 7. There we have six application areas marketing 761, engineering 762, production planning 763, plant operations 764, distribution 769, and business management 768. These different areas can be considered as a part of a wheel surrounding common enterprise support services 771 which itself surrounds the relational enterprise data base 770 forming the hub of that wheel.

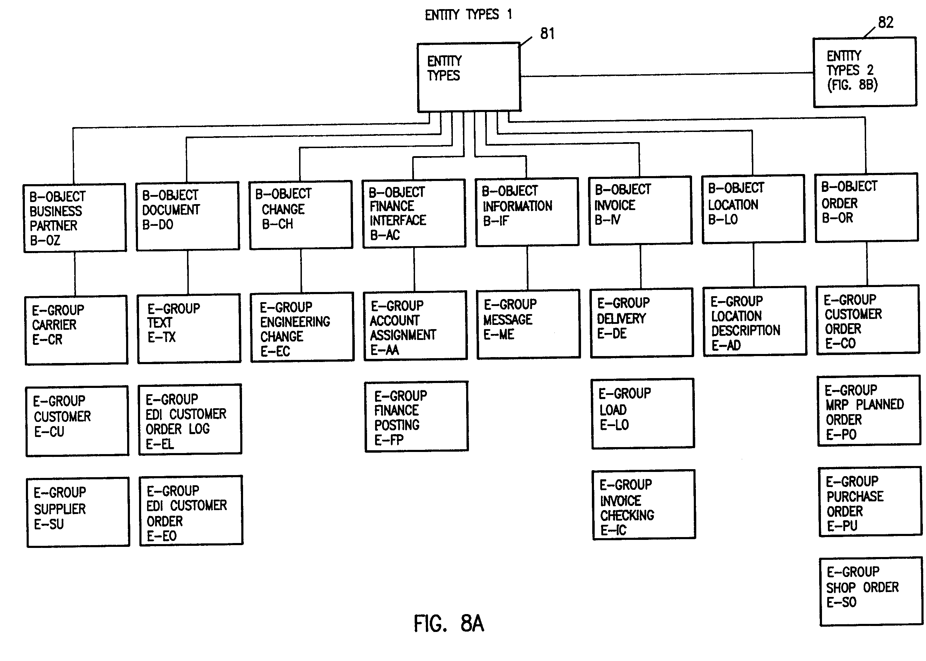

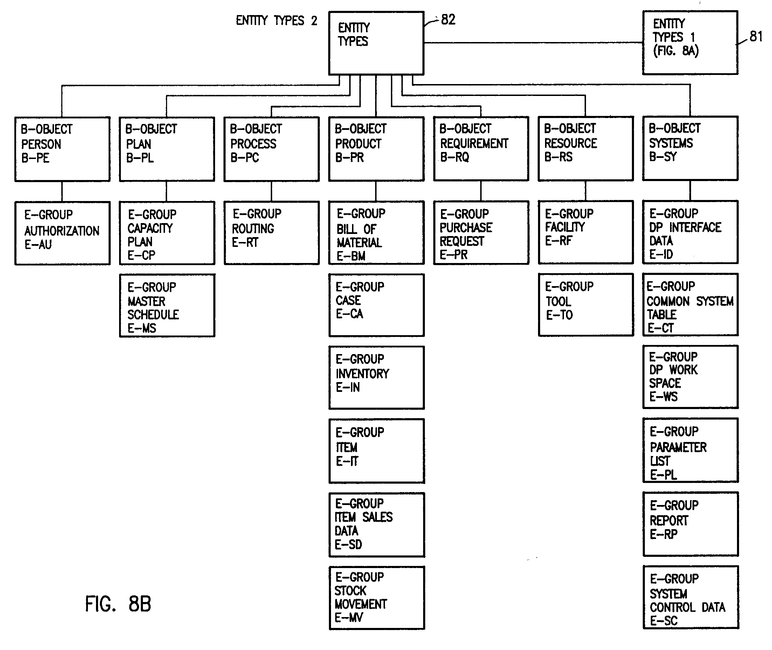

In Fig. 8 (consisting of Fig. 8A and 8B) there are shown different entity types, the form of entity types 1 81 and entity types 2 82.

In classification of data of an enterprise the first step is to describe business objects that are used in the business activities of all areas of an enterprise. Because the term entity is a very general one it does not allow to classify entities by its level of detail and abstraction. In the data model in accordance with the present invention there are differentiated between the following types of entities: business object, entity group, data group and attribute. The business object describes general business terms of an enterprise. They are building blocks of the business processes. In the program series data model they are decomposed to entity groups. In the data model in accordance with the present invention there are different objects shown in Fig. 8 and encompass for example the following business objects: business partner B-OZ, document B-DO, change B-CH, finance interface B-AC, information B-IF, invoice B-IV, location B-LO, order B-OR, person B-PE, plan B-PL, process B-PC, product B-PR, requirement B-RQ, resource B-RS, and systems B-SY.

The entity group is decomposed from the business object. It represents a collection of entities that logically belong together. A customer order as well as a shop order or a purchase order belong to the business object order B-OR. Thus, in Fig. 8 to business object partners B-OZ, the entity groups carrier E-CR, customer E-CU and supplier E-SU belong. To the business object document B-DO there belong the entity groups text E-TX, EDI customer order log E-EL and EDI customer order E-EO. To the business object change B-CH there belongs the entity group engineering change E-EC. To the business object finance interface B-AC belong the entity groups account assignment E-AA and finance posting E-FP. To the business object information B-IF belongs the entity group message E-ME. To business object invoice B-IV belongs the entity group delivery E-DE, load E-LO and invoice checking E-IC. To the business object location B-LO belongs the entity group location description E-AD. To the business object order B-OR belongs as partly already mentioned the entity group customer order E-CO, MRP planned order E-PO, purchase order E-PU and shop order E-SO. To the business object person B-PE belongs the entity group authorization E-AU and to the business object plan B-PL belong the entity groups capacity plan E-CP and master schedule E-MS. To the business object process B-PC belongs the entity group routing E-RT. To the business object product B-PR belong the entity groups bill of material E-BM, case E-CA, inventory E-IN, item E-IT, item sales data E-SD and stock movement E-MV. The business object requirements B-RQ encompasses the entity group purchase request E-PR. The business object resource B-RS encompasses the entity groups facility E-RF and tool E-TO. Finally the business object systems B-SY encompasses the entity groups DP interface data E-ID, common system table E-CT, DP work space E-WS, parameter list E-PL, report E-RP and system control data E-SC.

A data group is decomposed from an entity group. The data group is a selection of attribute of a usually normalized table. For example, the following data group belong to the entity group item: item identification, item data, item responsibility, item text reference, item routing reference, inventory summary.

Finally the already mentioned attributes form a data group or several data groups or with other words, a data group is decomposed to attributes, i. e. consists of attributes. Attributes are often also called elements or data elements.

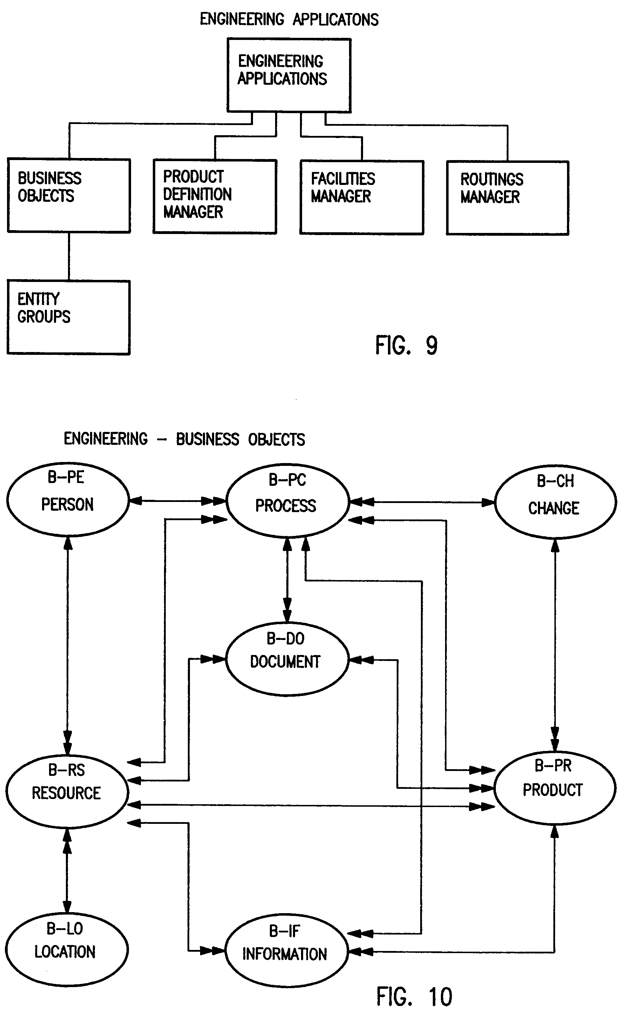

As an example in Fig. 9 there is shown the area of engineering applications. This area includes business objects and entity groups as well as three different application programs, the product definition manager, the facilities manager and the routings manager. Generally the applications in this engineering application area maintain the basic records of how products are made, from what components they are made, and which processes are necessary to produce the product. Engineering is also concerned with determining the cost of new products or product changes.

The main object of the Product Definition Manager is to maintain the basic engineering records that define products, their components and structures. Other functions allow specifying planning factors and building profiles in keeping with a repetitive production method of manufacture. This program also allows to perform basic retrievals against the product and the product structure. Product development is the main user of this application. The input to this area comes from marketing and plant operations. Output is directed to process development, production planning and plant operations.

The Facilities Manager manages the information about a company's production resources. This includes work center, machine, tool and took kit data. Besides the definition of the resources, capacity, cost rates, also actual status are included. Facilities engineering is the main user of facilities manager. Input to this area comes from process development, plant operations and costing. Output is directed to capacity requirements planning, plant operations and cost evaluation.

The Routings Manager functions to support creation of process control specifications, routings, quality specifications and operation descriptions. This also include assignment of required skills, facilities and their capacities, tools and material. Input to this area comes from product development. The created routings are mainly used by plant operations and capacity requirements planning.

They also serve as a base for product cost calculation. Process development is the main user of routings manager.

Fig. 10 shows the business objects of the application area engineering as shown in Fig. 9. The diagram shows bubbles for the different business objects, like person B-PE, process B-PC, change B-CH, resource B-RS, document B-DO, product B-PR, location B-LO and information B-IF. Between these different business objects there exist different relationships. Those different relationships are indicated by single or double headed arrows pointing to the different bubbles. The meaning of these relationship arrows has been described already in connection with Fig. 4.

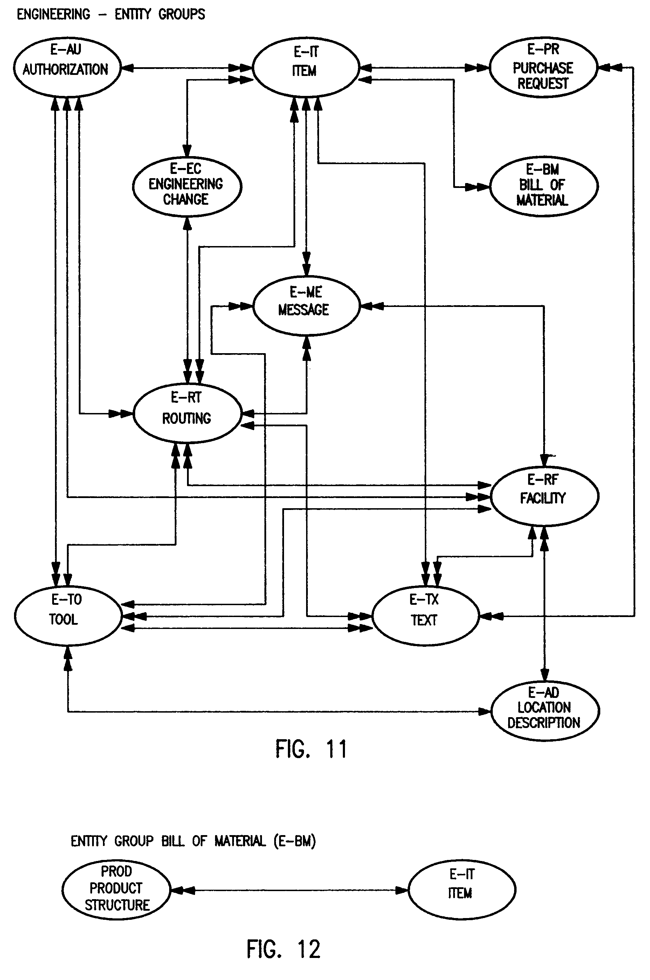

In Fig. 11 there is shown the relationship diagram of the entity groups of the application area engineering. The different entity groups authorization E-AU, item E-IT, purchase request E-PR, engineering change E-EC, bill of material E-BM, message E-ME, routing E-RT, facility E-RF, tool E-TO, text E-TX and location description E-AD are shown with their relationship arrows. Both Figs. 10 and 11 show the entity view of the data within an area, namely the engineering area of an enterprise.

In Fig. 12 there is shown the entity group bill of material E-BM with the product structure PROD and the ITEM E-IT. It shows the entity types and relationships of the entity group bill of material.

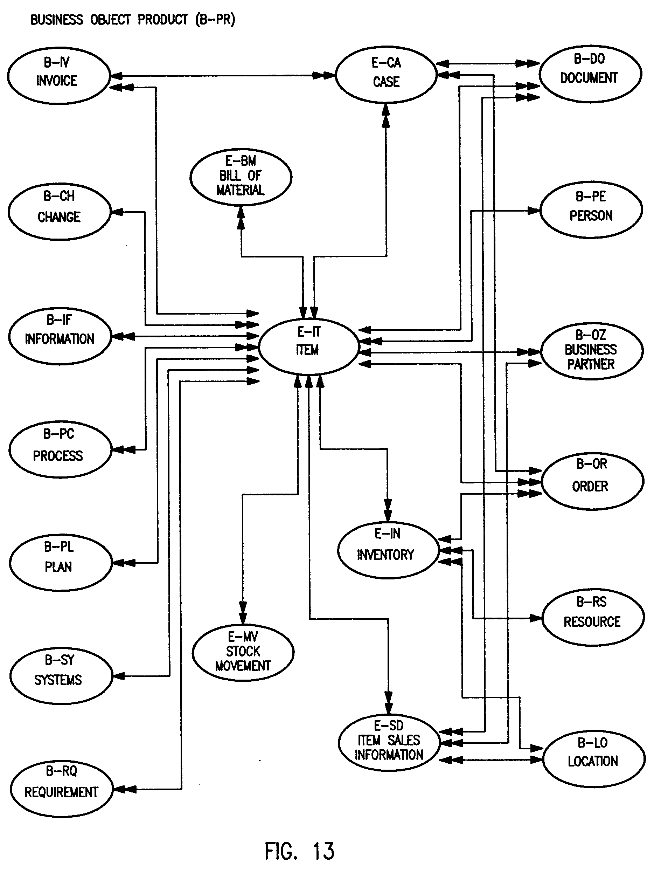

A further example within the entity view shows the entity types and relationships of the business object product B-PR in Fig. 13. This diagram shows the business object product and entities belonging to it and their mutual relationships. Thus, there are included the business objects invoice B-IV, change B-CH, information B-IF, process B-PC, plan B-PL, systems B-SY, requirement B-RQ, shown in the left-hand column and the business objects document B-DO, person B-PE, business partner B-OZ, order B-OR, resource B-RS and location B-LO in the right-hand column of the diagram. In the middle of the diagram there are shown the entities case E-CA, bill of material E-BM, item E-IT, inventory E-IN, stock movement E-MV and item sales information E-SD. These entities and these business objects have certain relations to each other which are indicated by the single and double headed arrows.

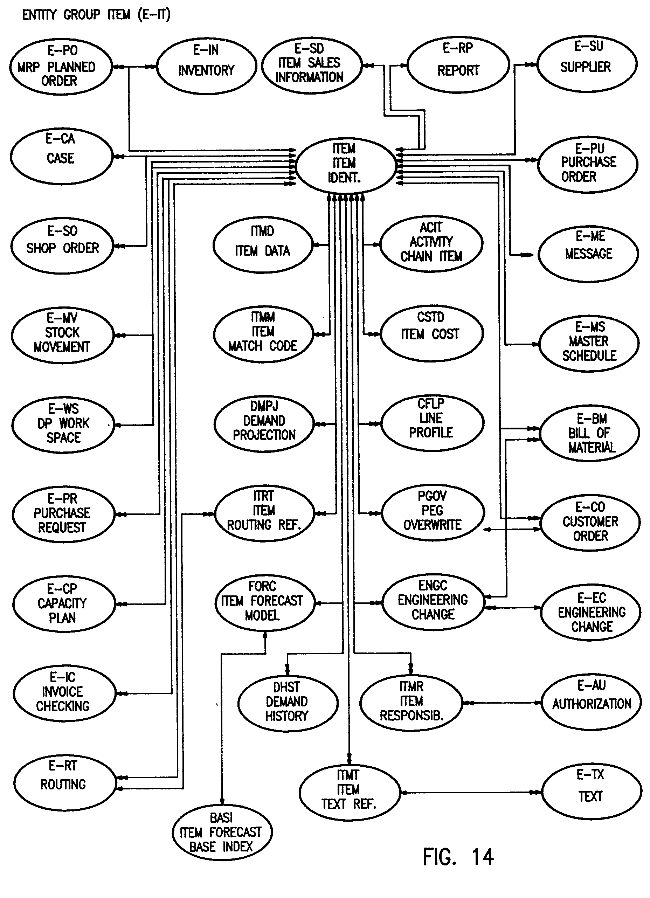

If one takes the business object item E-IT and looks at it more deeply, then plenty of relationships and plenty of entity groups as well as data groups with their attributes will be visible. This visibility is shown in Fig. 14 on hand of example of entity group item E-IT. So there are included for this entity group item the entities MRP planned order E-PO, case E-CA, shop order E-SO, stock movement E-MV, DP work space E-WS, purchase request E-PR, capacity plan E-CP, invoice checking E-IC and routing E-RT in the left- hand column. In the top line there are shown the entity groups inventory E-IN, item sales information E-SD, report E-RP and supplier E-SU. The right hand column shows furthermore the entity groups purchase order E-PU, message E-ME, master schedule E-MS, bill of material E-BM, customer order E-CO, engineering change E-EC, authorization E-AU and text E-TX. Between these two columns and the top line there is shown the item ident. ITEM which is in relation to the following data groups: item data ITMD, item match code ITMM, demand projection DMPJ, item routing reference ITRT, item forecast model FORC, item forecast base index BASI, demand history DHST in the left-hand part of the middle column. The right- hand part of the middle column shows the activity chain item ACIT, the item cost CSTD, line profile CFLP, peg overwrite PGOV, engineering change ENGC, item responsibility ITMR and item text reference ITMT.

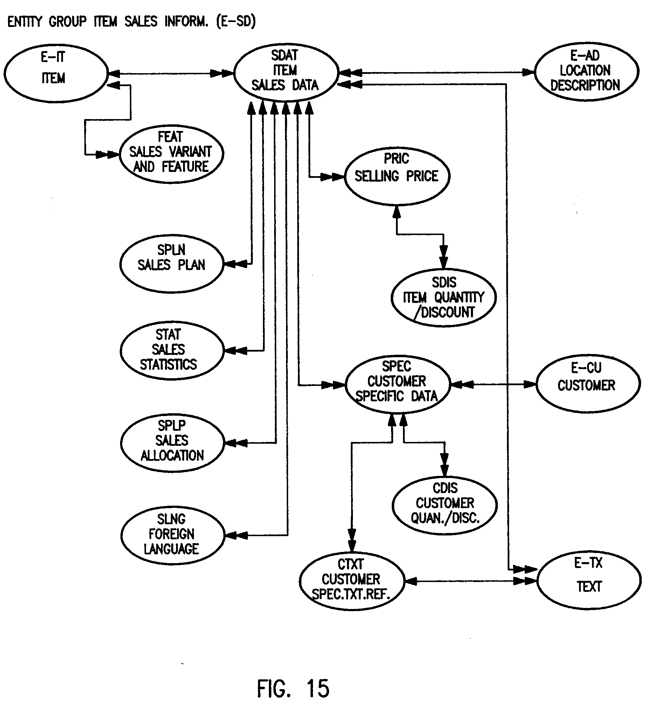

In Fig. 15 there is shown a further example for an entity type and its relationships at the example of the entity group item sales data E-SD. This diagram shows the relationship to the entity group item E-IT and the own data groups sales variant and feature FEAT, sales plan SPLN, sales statistics STAT, sales allocation SPLP, foreign language SLNG which are related to the item sales data SDAT. Furthermore, in relation with item sales data SDAT are the entity group location description E-AD, the entity group text E-TX and over the data group customer specific data SPEC the entity group customer E-CU. Further data groups selling price PRIC with item quantity/discount SDIS are shown with the customer specific data group SPEC there are in relation the customer quantity/discount data group CDIS and the customer specific text reference CTXT.

Generally, the description and organization of data and how the data is interrelated and can be used, reflects the information structure of an enterprise. It is a representation of what is or could be real and can as such be seen as a model of the real world. It shows who creates, maintains, and uses which data.

By the model structure of the invention, as described before, a user may manouver through the different levels up and down as well as within the levels and also between the application and entity views.

Everyone in an enterprise has his perspective and understanding of the company. In each enterprise area, some users have a good knowledge and experience. Such a user can be considered as an expert. Modeling is a means of joining these individual views and understandings to the benefit of the entire enterprise.

Most of existing applications were developed without much interaction with other functions. During this process different names for the same piece of information were used, and the same information was stored and had to be maintained in various sources.

The data within a company is valuable corporate assets and should be defined and stored independent of specific applications.

The data model is not static, it grows depending on new applications and new user requirements.

The data model of the invention provides the following advantages:
o Acts as a control instrument for management. It gives an overview of organization structures and dependencies in a graphical view, and shows information in a clear, distinct way.
o Documentation of relevant enterprise data.
   Helps to document one of the most important resources of an enterprise, namely data. It shows interfaces and data redundancy.
o May serve as a basis to compare the enterprise's data structures to standard software systems.
o Requires no programming skill.
o Makes consequences of organization changes visible.
o Supports communication between user groups.
   For example a data model containing information on enterprise data supports communication because no data processing skill or particular data processing language is required.
o Platform for application designers.
   For example application designers consider data, functions, and process flows rather than columns and rows of a relational database system when designing new applications. The data model can also be used as a basis for future information systems.
o Designers and developers can use the same 'language' to design new applications.
o Helps to identify projects only partially complete and redundant data within the integration concept.
o Integration vehicle for evolutionary system integration of applications (e.g. CIM). It provides a concentrated view of integration relationships that may serve as a basis for education and training on the data processing processes in an enterprise. For example the entities, attributes, and relationships related to routings or process plans in the engineering area could be used to integrate manufacturing routings and process plans that are required in the plant operations applications area.

## Claims

1. Method for processing, handling, presenting data pertaining to an enterprise, especially a manufacturing enterprise, in the form of a data model, in order to improve the understanding of business processes, said method containing the steps of arranging said data in such a way that said data are looked at, used and/or their relationship indicated in a manner of
a) an application view and
b) of an entity view;
c) said application view preferably including application areas such as enterprise or business object, entity groups, and applications such as data groups, and
d) said entity view preferably including enterprise or business object and entity groups.

2. Method as in claim 1, wherein said data are described in entity relationship diagrams containing textual description of that entities, of their relationships and their usage.

3. Method as in claim 1 or 2, wherein said data is grouped into submodels that combine conceptual and logical enterprise data.

4. Method as in claim 1, 2, or 3, wherein that application view is hierarchically organized from application area level over application level down to function level.

5. Method as in claim 1, 2, 3, or 4, wherein that entity view is hierarchically organized from enterprise object level over entity group level, data group level down to attribute level.
